# EUROPÄISCHE PATENTANMELDUNG

(11) **EP 4 491 466 A1**
(43) Veröffentlichungstag der Anmeldung: **15.01.2025**
(21) Anmeldenummer: 24187714.1
(22) Anmeldetag: 10.07.2024
(51) Int. Cl.: B60T 7/04, B60T 8/32, B60T 13/66, B60T 13/68

(54) **MOBILE ARBEITSMASCHINE MIT EINER BREMSEINHEIT**

(30) Priorität: 11.07.2023 DE 102023118341
(71) Anmelder: Kramer-Werke GmbH, 88630 Pfullendorf (DE)
(72) Erfinder: Wizgall, Andreas, 78333 Mahlspüren im Tal (DE)
(74) Vertreter: Otten, Roth, Dobler & Partner mbB Patentanwälte

(57) **Zusammenfassung**

Es wird eine mobile Arbeitsmaschine mit einem Fahrzeugrahmen und mit einer Antriebseinheit zum Antreiben wenigstens eines um eine Antriebsachse drehbaren Antriebslaufrades, wobei wenigstens ein Arbeitswerkzeug und/oder eine Werkzeughaltevorrichtung zum Halten des Arbeitswerkzeugs vorgesehen ist, wobei wenigstens eine zumindest ein Bremselement (HA, VA) aufweisende Bremseinheit (10) zum Bremsen des wenigstens einen Antriebslaufrades vorgesehen ist, wobei die Bremseinheit (10) als wenigstens eine Bremsflüssigkeit umfassende Hydraulik-Bremseinheit (10) ausgebildet ist, wobei wenigstens ein Bremspedal (20) zum manuellen Betätigen von einer Bedienperson und zum Druckbeaufschlagen der Bremsflüssigkeit vorgesehen ist, wobei die Hydraulik-Bremseinheit (10) wenigstens eine Zylinder-Kolben-Einheit (1) mit wenigstens einer zwischen einem Bremszylindergehäuse (1.2) und einem Bremskolben (1.1) angeordneten Kolbenkammer umfasst, vorgeschlagen, die wenigstens teilweise die Nachteile des Standes der Technik verbessert. Dies wird erfindungsgemäß dadurch erreicht, dass wenigstens ein Bremssensor (3) zum Erfassen eines Bremsparameters vorgesehen ist und dass der Bremssensor (3) und/oder Bremsparameter zum Kontrollieren/Steuern/Regeln der Hydraulik-Bremseinheit (10) und/oder der Zylinder-Kolben-Einheit (1) und/oder des Hydraulikdruckes der Kolbenkammer ausgebildet ist.

## Beschreibung

Die Erfindung betrifft eine mobile Arbeitsmaschine, insbesondere Radlader, Teleskoplader, Bagger, Dumper, Traktor oder dergleichen, mit einem Fahrzeugrahmen und mit einer Antriebseinheit zum Antreiben wenigstens eines um eine Antriebsachse drehbaren Antriebslaufrades, nach dem Oberbegriff des Anspruchs 1.

### Stand der Technik

Mobile Arbeitsmaschine, insbesondere Dumper, Radlader, Teleskoplader, Bagger, Traktor oder dergleichen, mit einem Fahrzeugrahmen und mit einer Antriebseinheit zum Antreiben wenigstens eines Antriebsrades, werden heutzutage meist noch mit einem flüssigen Kraftstoff betrieben. Dabei kommen heute hauptsächlich dieselgetriebene Fahrzeuge zum Einsatz. Zwischenzeitlich sind bereits elektrisch angetriebene Maschinen mit einem aufladbaren Akkumulator bzw. elektrischen Energiespeicher im Einsatz.

Üblicherweise weisen diese mobilen Arbeitsmaschinen lösbar verbindbare Arbeitswerkzeuge auf, z.B. die mittels sog. "Schnellwechslern" bzw. "Wechselplatten" gehalten bzw. gelöst werden. Vielfach sind diese Arbeitswerkzeuge an einer als Hubarm, Teleskoparm oder dergleichen ausgebildeten Werkzeughaltevorrichtung angeordnet. Zum Heben und/oder Senken dieser als auch die zum Teil aktiv antriebbaren Werkzeuge wie Greifschaufel, Kehrbesen etc. werden bei sog. "vollelektrischen" Maschinen diese elektrisch und bei sog. "hybriden" Maschinen werden diese Komponenten mittels einem hydraulischen System betrieben.

Bei Dumpern sind die Arbeitswerkzeuge als Mulde bzw. Wanne ausgebildet, die im Allgemeinen hebbar und senkbar bzw. um eine Drehachse schwenkbar/kippbar sind, insb. mit einem hydraulischen System bzw. der entspr. Werkzeughaltevorrichtung. Die Mulde bzw. Wanne ist vielfach fest montiert, wobei neuere Dumper auch leicht lösbar verbindbare Wechselsysteme für verschiedenen Aufsätze bzw. Arbeitswerkzeuge aufweisen können.

Üblicherweise kommen bei derartigen Arbeitsmaschinen direkt betätigte Bremssysteme nach dem Geber-Nehmer-Prinzip, hydraulisch und pneumatisch unterstützte Servobremsen sowie Fremdkraftbremsen zum Einsatz. Hierbei kann weiter unterschieden werden zwischen Systemen mit einem oder mehreren voneinander getrennten Bremskreisen. Um die erforderliche Verzögerungswirkung der Maschine zu erzielen, werden im Fall von Servobremsen sowie bei Bremsen nach dem Geber-Nehmer-Prinzip über den verfügbaren Hub des Bremspedals einerseits ein ausreichend großes Volumen an Bremsflüssigkeit verdrängt, um sämtliche Lüftspiele im System zu überwinden und damit die Bremsbeläge mit den Bremsscheiben in Kontakt zu bringen. Darüber hinaus werden ein ausreichend hoher Druck generiert, um die nötigen Verzögerungsmomente an den Bremsscheiben bzw. -lamellen zu erreichen. Dabei darf die aufzubringende Pedalkraft für den Bediener nicht zu hoch werden.

Bei nicht-servounterstützten Bremszylindern wird die Kraft zum Aufbau des Bremsdrucks einzig durch den Bediener aufgebracht. Wird diese zu hoch, so kann dem über die Hebelübersetzung der Pedalerie oder über den gewählten Kolbendurchmesser des Bremszylinders entgegengewirkt werden, was jedoch zu einem größeren Betätigungshub am Pedal führt. Durch den Einsatz sogenannter Stufenkolben, bei dem ein Kolben mit größerem Durchmesser die Bremskreise vorfüllt, kann der nötige Betätigungshub reduziert werden. Mit Erreichen eines gegebenen Schaltdrucks bleibt eine reduzierte Fläche des gestuften Kolbens wirksam, über die ein höherer Bremsdruck generiert werden kann.

Alternativ oder auch ergänzend zu gestuften Kolben am Geberzylinder findet die pneumatische bzw. hydraulische Servounterstützung Anwendung. Dabei wird die mechanische, durch den Bediener ausgeübte, Kraft auf den Bremskolben durch einen Unterdruck im Falle der pneumatischen oder einen positiven Druck auf eine zusätzliche Wirkfläche am Bremszylinder im Falle der hydraulischen Servounterstützung, ergänzt. Dazu wird zu Beginn des am Bremszylinder eingeleiteten Hubes zunächst ein in diesen integriertes Ventil betätigt, welches zunächst den unterstützenden Servodruck proportional zum Hub aufprägt, bevor mit Erreichen der maximalen Ventilbetätigung die Betätigungskraft durch den Bediener ergänzend wirksam wird. In beiden Fällen, bei Verwendung von gestuften Kolben, wie auch im Fall von servounterstützten Bremszylindern, leidet die Feinfühligkeit sowie die Dosierbarkeit zu Beginn der Bremsvorgänge. Insbesondere die Übergänge zwischen der Wirkung der Teilflächen im Fall der Stufenkolben sowie beim Erreichen der maximalen Servounterstützung, ab der ein weiterer Druckaufbau nur noch mechanisch über die Betätigungskraft durch den Bediener erfolgt, wird häufig als störend empfunden. Hinzu kommt, dass bei Fahrzeugen mit hydrostatischem Fahrantrieb, bei dem die Maschine zunächst durch Reduktion des Schwenkwinkels der verstellbaren Fahrpumpe verzögert wird, häufig ein unharmonischer Übergang von der (Inch-)Bremsung durch den hydrostatischen Fahrantrieb zur Betriebs-Bremsung mittels Bremszylinder bemängelt wird. Beim Einsatz servounterstützter Bremssysteme können darüber hinaus Schwingungen und Stick-Slip-Effekte die Abstimmung der Systeme erschweren.

Nachteilig ist demzufolge bei den bisherigen Bremssystemen, dass sich dessen Bremswirkung sich nicht feinfühlig dosieren lässt und/oder dem Bediener bislang kein gut wahrnehmbares Feedback gibt. Die Systeme sind bislang nicht besonders komfortabel, flexibel und/oder mit geringem Aufwand abstimmbar. Zudem weisen bislang die Systeme einen weniger harmonischen Bremsdruckaufbau, insbesondere im Übergangsbereich zwischen Inch-Bremsung und der weiteren Bremsverzögerung durch das Bremssystem, und/oder keine hohe Kosteneffizienz auf.

### Aufgabe und Vorteile der Erfindung

Aufgabe der Erfindung ist es demgegenüber, eine mobile Arbeitsmaschine, insbesondere Radlader, Teleskoplader, Bagger, Dumper, Traktor oder dergleichen, vorzuschlagen, die wenigstens teilweise die Nachteile des Standes der Technik verbessert, insbesondere ein verbessertes und/oder kostengünstiges und/oder komfortables Bremssystem zu realisieren.

Diese Aufgabe wird, ausgehend von einer mobilen Arbeitsmaschine der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend umfasst eine erfindungsgemäße, mobile Arbeitsmaschine, insbesondere Radlader, Teleskoplader, Bagger, Dumper, Traktor oder dergleichen, einen Fahrzeugrahmen und eine Antriebseinheit zum Antreiben wenigstens eines um eine Antriebsachse drehbaren Antriebslaufrades, wobei wenigstens ein Arbeitswerkzeug, wie z.B. eine Mulde, eine Schaufel, eine Greifschaufel, eine Gabel, ein Kehrbesen, ein Räumschild oder dergleichen, und/oder eine Werkzeughaltevorrichtung zum Halten des Arbeitswerkzeugs vorgesehen ist, wobei wenigstens eine zumindest ein Bremselement aufweisende Bremseinheit zum Bremsen des wenigstens einen Antriebslaufrades vorgesehen ist, wobei die Bremseinheit als wenigstens eine Bremsflüssigkeit umfassende Hydraulik-Bremseinheit ausgebildet ist, wobei wenigstens ein Bremspedal zum manuellen Betätigen von einer Bedienperson und zum Druckbeaufschlagen der Bremsflüssigkeit vorgesehen ist, wobei die Hydraulik-Bremseinheit wenigstens eine Zylinder-Kolben-Einheit mit wenigstens einer zwischen einem Bremszylindergehäuse und einem Bremskolben angeordneten Kolbenkammer umfasst, wobei wenigstens ein Bremssensor zum Erfassen eines Bremsparameters vorgesehen ist und dass der Bremssensor/Bremsparameter zum Kontrollieren/Steuern/Regeln der Hydraulik-Bremseinheit und/oder der Zylinder-Kolben-Einheit und/oder des Hydraulikdruckes der Kolbenkammer ausgebildet ist.

Mit Hilfe eines derartigen Bremssensors kann in vorteilhafter Weise ein relevanter Bremsparameter direkt oder indirekt erfasst werden und das Bremsen bzw. der Bremsvorgang an den erfassten, tatsächlichen bzw. relevanten Ist-Bremsparameter angepasst werden. Hierdurch wird die Ist-Bremswirkung erfassbar und es kann das Bremsen entscheidend verbessert werden, insb. sowohl bzgl. der Sicherheit als auch bzgl. dem Komfort für den Fahrer.

Vorteilhafterweise ist der Bremssensor zum Kontrollieren/Steuern/Regeln eines Sensor-Stellgliedes, insbesondere eines Bremsdruckventils, ausgebildet und/oder ist ein Sensorsignal des Bremssensors als Bremssignal der Bremseinheit ausgebildet, wobei insb. die Bremseinheit das Bremsen und/oder den Bremsvorgang in Abhängigkeit des Senorsignals kontrolliert/steuert/regelt. Hiermit kann eine vorteilhafte Anpassung des Bremsens an die tatsächliche Ist-Situation der Arbeitsmaschine realisiert werden.

Vorzugsweise ist wenigstens eine elektrische und/oder elektronische Kontrolleinheit zum elektrischen und/oder elektronischen Kontrollieren/Steuern/Regeln des Sensor-Stellgliedes und/oder der Hydraulik-Bremseinheit und/oder der Zylinder-Kolben-Einheit und/oder des Hydraulikdruckes der Kolbenkammer vorgesehen. Hiermit kann eine vorteilhafte Auswertung und/oder Weiterverarbeitung und/oder Weiterleitung des ggf. weiterverarbeiteten Sensorsignals umgesetzt werden. Gerade hiermit können bei Bedarf neuartige Bremsfunktionalitäten realisiert werden.

Vorteilhafterweise ist der Bremssensor als Drucksensor zum Erfassen eines Hydraulikdruckes der Bremsflüssigkeit ausgebildet. Beispielsweise handelt es sich beim Hydraulikdruck um den wirksamen Hydraulikdruck der Bremseinheit und/oder der Zylinder-Kolben-Einheit. Das bedeutet, dass es sich um den Hydraulikdruck der Zylinder-Kolben-Einheit und/oder des Bremselementes handeln kann, der z.B. unmittelbar die Bremswirkung bzw. die Betätigung des Bremselementes generiert.

Vorzugsweise ist der Bremssensor und/oder Drucksensor zwischen dem Bremselement des Antriebslaufrades und der Hydraulik-Bremseinheit und/oder Zylinder-Kolben-Einheit und/oder dem Bremszylindergehäuse angeordnet. Diese Maßnahme gewährleistet, dass gerade der wirksame bzw. wirkende Bremsdruck und/oder der den Hydraulikdruck des bzw. für das Bremselement mit dem Bremssensor in vorteilhafter Weise erfasst wird. Somit kann die Bremswirkung bzw. die Betätigung des Bremselementes in besonderer Weise erfasst werden.

In einer vorteilhaften Variante der Erfindung ist der Bremssensor als Bremswegsensor zum Erfassen eines Weges/Hubes bzw. einer Bremsstrecke des Bremspedals und/oder des Bremskolbens ausgebildet. So kann mittels dem Bremsweg/Bremshub die tatsächliche Bremsung/Bremswirkung ermittelt und entspr. Maßnahmen bzw. Verfahrensschritte eingeleitet/generiert werden. Auch hiermit kann die Bremswirkung in vorteilhafter Weise erfasst und zur Kontrolle der Arbeitsmaschine bzw. des Bremsvorganges verwendet werden.

In einer besonderen Ausführungsform der Erfindung der Bremssensor als Beschleunigungssensor zum Erfassen einer Bremsbeschleunigung der Arbeitsmaschine ausgebildet. Beispielweise ermittelt der Beschleunigungssensor den aktuellen Verzögungszustand bzw. die (negative) Ist-Beschleunigung der Arbeitsmaschine. Zum Beispiel wird die auf eine Masse bzw. ein Sensorelement/-körper wirkende Trägheitskraft bestimmt/ermittelt. Somit kann z.B. bestimmt werden, ob eine Geschwindigkeitszunahme oder -abnahme stattfindet. Der Beschleunigungssensor kann als eine inertiale Messeinheit (englisch inertial measurement unit, IMU) ausgebildet werden. Diese ist meist eine räumliche Kombination mehrerer Inertialsensoren wie Beschleunigungssensoren und Drehratensensoren und sie ist bereits handelsüblich und somit kostengünstig einsetzbar und ggf. nachrüstbar. Auch können Beschleunigungssensoren verwendet werden, wie z.B. Gyrometer und/oder miniaturisierte Beschleunigungssensoren wie sog. mikro-elektro-mechanische Systeme (MEMS) und/oder Dehnungsmessstreifen, wobei die Verformung einer Befestigung mittels Dehnungsmessstreifen bestimmt wird, und/oder eine magnetische Induktion, wobei durch die Bewegung der an einer Feder aufgehängten Testmasse und durch einen Magneten in einer Spule eine elektrische Spannung induziert wird, und/oder ein Ferraris-Sensor, der die Relativbeschleunigung ohne Testmasse mit Hilfe von Wirbelströmen misst. So kann auch hiermit die Bremswirkung in vorteilhafter Weise erfasst und zur Kontrolle der Arbeitsmaschine bzw. des Bremsvorganges verwendet werden. Die Verzögerung/Beschleunigung wird ggf. in der Kontrolleinheit bzw. einem Controller oder dergleichen über einen Algorithmus ausgewertet und steuert in vorteilhafter Weise ein elektronisch verstellbares Stellglied und/oder Druckregelventil oder dergleichen an.

In einer besonderen Weiterbildung der Erfindung ist der Bremssensor als elektrischer und/oder elektronischer Bremssensor zum elektrischen/elektronischen Erfassen des Bremsparameters und/oder elektrischen/elektronischen Kontrollieren bzw. Steuern/Regeln des Sensor-Stellgliedes ausgebildet. So kann beispielsweise eine elektrische und/oder elektronische Weg-, Beschleunigung- und/oder Druckerfassung vorgesehen werden. Diese kann elektrisch und/oder elektronisch an die Bremseinheit und/oder eine elektrische und/oder elektronische Kontrolleinheit und schließlich ggf. bis zum Sensor-Stellglied weitergeleitet werden. Dies kann in vorteilhafter Weise zu einer elektrischen und/oder elektronischen Kontrolle bzw. Steuerung des Bremsens in Abhängigkeit des Bremssensors bzw. dessen elektrischen Bremssignals verwendet werden.

Dementsprechend ist wenigstens eine elektrische und/oder elektronische Kontrolleinheit zum elektrischen/elektronischen Kontrollieren/Steuern/Regeln des Sensor-Stellgliedes, insbesondere des Bremsdruckventils, von großem Vorteil.

Vorzugsweise kontrolliert/steuert/regelt und/oder generiert die Kontrolleinheit eine Schaltzeit und/oder Öffnungszeit und/oder Schalt-/ Öffnungszyklen des Sensor-Stellgliedes. Hierdurch kann das Sensor-Stellglied beispielsweise kurzfristig geöffnet werden, so dass sich kurzfristig bzw. jeweils bei geöffnetem Sensor-Stellglied ein etwas erhöhter Bremsdruck am Bremselement und/oder der Bremseinheit einstellt. Vorteilhafterweise wird eine zyklische Betätigung bzw. Öffnung des Sensor-Stellglieds verwirklicht. So lässt sich der resultierende Bremsdruck ggf. stufenweise bzw. iterativ/allmählich an die Ist-Situation bzw. den Beladungszustand und/oder andere Bremsrahmenbedingungen anpassen.

Vorteilhafterweise ist das Sensor-Stellglied zum Druckbeaufschlagen des Kolbenraumes und/oder der Hydraulik-Bremseinheit und/oder der Zylinder-Kolben-Einheit ausgebildet, wobei insbesondere eine Pedalkraft des Bremspedals und/oder eine hydraulische Druckkraft der Druckbeaufschlagung des Sensor-Stellgliedes eine Bremskraft und/oder einen Bremsdruck der Bremseinheit und/oder des Bremselementes ausbilden/erzeugen und/oder wobei das Sensor-Stellglied in vorteilhafter Weise zwischen einer Druckerzeugungseinheit zum Druckbeaufschlagen der Bremsflüssigkeit und dem Kolbenraum und/oder der Hydraulik-Bremseinheit und/oder der Zylinder-Kolben-Einheit angeordnet ist. Mit Hilfe dieser Maßnahme kann eine vorteilhafte Bremskraftverstärkung generiert werden. Beispielsweise generiert die Pedalkraft bzw. die Person eine erste Bremskraft, die auf den Kolbenraum und/oder die Hydraulik-Bremseinheit und/oder die Zylinder-Kolben-Einheit wirkt.

Mit Hilfe des Sensor-Stellgliedes und/oder der hydraulischen Druckkraft der Druckbeaufschlagung und/oder der Druckerzeugungseinheit wird in vorteilhafter Weise eine zweite Bremskraft, die auf den Kolbenraum und/oder die Hydraulik-Bremseinheit und/oder die Zylinder-Kolben-Einheit wirken kann, generierbar. Dies ermöglicht vollkommen neuartige Möglichkeiten bzw. Funktionalitäten in Bezug auf das Bremsen und/oder sogar das Betreiben/Fahren der mobilen Arbeitsmaschine.

Grundsätzlich kann die erste Bremskraft und die zweite Bremskraft zusammen oder alternativ bzw. zeitlich versetzt generiert bzw. beaufschlagt werden. Dementsprechend kann eine manuelle und/oder eine automatisierte Betätigung der Bremseinheit und/oder des Bremselementes verwirklicht werden. Bei der automatisierten Betätigung bzw. Bremsung kann dies mit Hilfe des Sensor-Stellgliedes und/oder der hydraulischen Druckkraft der Druckbeaufschlagung und/oder der Druckerzeugungseinheit und/oder der Kontrolleinheit und/oder des Bremssensors umgesetzt werden. Zum Beispiel kann die zweite Bremskraft in vorteilhafter Weise als eine Zusatzbremskraft und/oder eine Ausgleichsbremskraft zum Ausgleich von Bremskraft-/Bremsdrucksprüngen oder dergleichen und/oder eine Hilfsbremskraft bei Bergabfahrten und/oder eine Notbremskraft bei Fahrwegkontrolle bzw. (teilweise) autonomer Fahrweise und/oder Haltebremskraft im Stillstand bzw. ohne Fahrer/Bediener und/oder Anfahrbrems-/Anfahrhaltekraft beim Berganfahren oder dergleichen ausgebildet/eingesetzt werden.

Vorteilhafterweise ist die Kontrolleinheit zum Anpassen/Ändern der hydraulischen Druckkraft der Druckbeaufschlagung des Sensor-Stellgliedes und/oder der zweiten Bremskraft in Abhängigkeit des Bremsparameters des Bremssensors und/oder eines Betriebsparameters der Arbeitsmaschine ausgebildet, so dass insbesondere eine anpassbare/veränderbare Bremscharakteristik realisierbar ist. Hiermit kann z.B. eine unterstützende Bremsfunktion bzw. eine komfortable Bremsung realisiert werden, insb. ohne große/abrupte Bremskraftänderungen/-sprünge oder dergleichen. Dies erhöht deutlich den Fahr-/Bremskomfort für den Bediener der Arbeitsmaschine.

Vorteilhafterweise weist die Zylinder-Kolben-Einheit und/oder der Bremskolben wenigstens einen ersten Kolben der Kolbenkammer mit einer ersten Kolbenfläche und einen zweiten Kolben mit einer zweiten Kolbenfläche auf, wobei die erste Kolbenfläche der Kolbenkammer größer als die zweite Kolbenfläche ist. Hiermit wird eine vorteilhafte Änderung der Wirkflächen und somit des Bremsdruckes generiert. Auch kann hiermit in vorteilhafter Weise unterschiedliche Bremsdrücke bzw. -kräfte generiert werden, die z.B. einerseits für ein vorderes Antriebs-/Laufrad bzw. Bremselement und andererseits für ein hinteres Antriebs-/Laufrad bzw. Bremselement verwendbar ist. Das bedeutet, dass die Bremskraft/-wirkung vorne und hinten unterschiedlich ausgebildet werden können.

Generell kann mit Hilfe der Erfindung bzw. vorteilhafter Ausführungsvarianten der Erfindung ein vorteilhaftes Bremsen bzw. Bremssystem, dessen Bremswirkung sich feinfühlig dosieren lässt und/oder dem Bediener ein gut wahrnehmbares Feedback gibt. So ist dies in seiner Betätigung komfortabel, flexibel und mit geringem Aufwand abstimmbar bzw. einstellbar, insb. mittels der Kontrolleinheit. Zudem kann ein harmonischer Bremsdruckaufbau, insbesondere im Übergangsbereich zwischen sog. Inch-Bremsung bzw. "Antriebsmotorbremsung" und der weiteren Bremsverzögerung durch das Bremssystem gemäß der Erfindung ermöglichen und zudem eine hohe Kosteneffizienz aufweisen.

Es lässt sich eine Vielzahl vorteilhafter, exemplarischer Funktionalitäten durch das vorgestellte erfindungsgemäße Bremssystem bzw. dessen Merkmale (einzeln oder beliebig miteinander kombiniert) realisieren, wie z.B.:
- Elektronische Hilfsbremsfunktion. Beispielsweise bei Bergabfahrten als Schutzfunktion von insbesondere elektrischen Antriebsmotoren oder zur Unterstützung von Geschwindigkeitsregelfunktionen. Im Fall der Geschwindigkeitsregelfunktion kann die Funktion die Maschine über die hydraulische Druckkraft der Druckbeaufschlagung des Sensor-Stellgliedes und/oder der zweiten Bremskraft bzw. der sog. Servostufe unabhängig vom Zutun des Bedieners verzögern, sobald ggf. die Fahrgeschwindigkeit z.B. bei Bergabfahrten höher ausfällt als die angestrebte Sollgeschwindigkeit. Zum Schutz der Antriebsmotoren vor zu hohen Drehzahlen kann z.B. die Maschinensteuerung bzw. die Kontrolleinheit die Maschine über die hydraulische Druckkraft der Druckbeaufschlagung des Sensor-Stellgliedes und/oder zweite Bremskraft bzw. Servostufe dann in vorteilhafter Weise verzögern, wenn z.B. bei Bergabfahrten das Stützmoment des Antriebs nicht ausreicht, um ggf. zu hohe Fahrgeschwindigkeiten und damit unzulässig hohe Drehzahlen des Antriebs zu verhindern. Zur Realisierung der genannten Funktionalitäten dienen v.a. das Fahrgeschwindigkeitssignal der Maschine und/oder eine gemessene Drehzahl im Antriebsstrang, z.B. des Antriebsmotors, Getriebes, Rads etc..
- Durch den Bediener wählbare Bremscharakteristika und Bremsintensität.
   Das Systemkonzept sieht u.a. vor, möglichst den mechanisch generierten Anteil der Bremswirkung so zu dimensionieren, dass damit die gesetzlich geforderte Notbremsfunktionalität erfüllt wird. So, kann der sog. servogenerierte Bremsdruckanteil als Komfortfunktionalität verstanden werden, d.h. der Anteil der hydraulischen Druckkraft der Druckbeaufschlagung des Sensor-Stellgliedes und/oder der zweiten Bremskraft. Dementsprechend ist es aus u.a. sicherheitstechnischer Sicht vertretbar, diese Komfortfunktionalität durch den Bediener einstellbar zu gestalten. Somit könnten sowohl der generelle Grad/Anteil der sog. Servounterstützung, wie auch dessen Charakteristik über den Verlauf des generierten Bremsdrucks anhand z.B. verschiedener wählbarer Kennlinien oder veränderlicher Parameter einstellbar sein. Veränderliche Softwareparameter können dabei Gewichtungsfaktoren oder Größen formelbasierter Zusammenhänge repräsentieren. Auch können verschiedene Charakteristika durch die Auswahl unterschiedlicher Formeln erfolgen, die den Zusammenhang zwischen gemessenem resultierenden Bremsdruck und dem aufgeprägten Servodruck abbilden.
- Automatische Haltefunktion der Maschine im Stillstand oder am Hang.
   Wird die mögliche Bremswirkung durch die sog. Servostufe bzw. die hydraulische Druckkraft der Druckbeaufschlagung des Sensor-Stellgliedes und/oder die zweite Bremskraft ausreichend hoch dimensioniert, so kann eine automatische Haltefunktion realisiert werden. Durch Aufprägen des sog. Servodrucks bzw. der hydraulischen Druckkraft der Druckbeaufschlagung des Sensor-Stellgliedes und/oder der zweiten Bremskraft kann die Maschine z.B. im Stillstand in der Ebene oder auch am Hang gehalten werden, um ein ungewolltes Wegrollen der Maschine zu unterbinden. Die Funktion kann beispielsweise automatisch eingelegt werden, sobald die Fahrgeschwindigkeit zu Null wird oder das Bremspedal im Stillstand eine definierte Zeit lang betätigt wird. Mit erneuter Betätigung des Gas- oder Fahrpedals kann z.B. die Haltefunktion wieder aufgehoben werden.
- Geregelte Berganfahrhilfe.
   Unter Einbeziehung weiterer Größen, wie beispielsweise der Antriebsdrehzahl oder vergleichbarer Drehzahlen im Antriebsstrang, der Drehmomentbelastung des Antriebs oder auch weiteren Betriebsgrößen kann das zuvor genannte Lösen einer Haltefunktion als Regelkreis oder Steuerung ausgeführt werden, welche das Anfahren am Hang unterstützt, indem die Bremswirkung ggf. nicht abrupt, sondern möglichst proportional zur Vortriebskraft der Maschine gelöst wird.
- Anpassbarkeit der Bremswirkung an den Beladungszustand der Maschine.
   Unter Einbezug einer Messgröße, welche auf den Beladungszustand der Maschine schließen lässt, kann durch automatische Variation des Druckes der Servostufe die Bremswirkung der Maschine an deren Beladungszustand angepasst werden. So kann die Verzögerungskraft bei einer größeren Gesamtmasse der Maschine höher ausfallen, als bei einer gering beladenen Maschine.
- Einstellbarkeit der Bremskraftverteilung zwischen Vorder- und Hinterachse.
   Bei z.B. sog. aufgelöstem Aufbau mit voneinander getrennten Bremszylindern für die jeweiligen Maschinenachsen, d.h. vorne und hinten, ist eine Verstellbarkeit der Bremskraftverteilung zwischen der Vorder- und der Hinterachse der Maschine möglich. Dazu wird der Grad der sog. Servounterstützung der jeweiligen Bremskreise ggf. unabhängig voneinander angepasst. Damit kann manuell oder automatisiert auf z.B. unterschiedliche Beladungszustände der Maschine reagiert werden. Eine geringer belastete Achse kann damit auch weniger stark gebremst werden, als die stärker belastete Achse, wodurch beispielsweise ein ungewolltes Blockieren der Räder an der gering belasteten Achse vermieden werden kann. Darüber hinaus könnte auch durch gezieltes leichtes Bremsen an den jeweiligen Achsen Nick-Schwingungen während der Fahrt entgegengewirkt werden, um diese durch eine geeignete Regelung der Bremseingriffe abzumildern oder im Idealfall vollständig zu eliminieren.
- Notbremsassistenzfunktion.
   Im Zusammenspiel mit einer sensorischen Ausstattung, die dazu geeignet ist, das Umfeld der Maschine zu erfassen, z.B. Kameras, Radarsensoren, Lasersensoren, etc., kann durch die Maschine über die sog. Servostufe bzw. die hydraulische Druckkraft der Druckbeaufschlagung des Sensor-Stellgliedes und/oder der zweiten Bremskraft (weitgehend) autonom ein Bremsvorgang eingeleitet werden, wenn z.B. Gefahrensituationen auftreten, bei denen beispielsweise Personen, Tiere, Hindernisse etc. der fahrenden Maschine zu nahe kommen oder sich die Maschine gefährlich schnell einem Hindernis annähert. Ebenso ist es vorstellbar, eine plötzliche starke Betätigung des Bremspedals als Gefahrensituation zu interpretieren und den servounterstützenden Druck bzw. die hydraulische Druckkraft der Druckbeaufschlagung des Sensor-Stellgliedes und/oder die zweite Bremskraft im zeitlichen Verlauf schneller aufzubauen, so dass dadurch das Einleiten eines Notbremsvorganges unterstützt wird.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematische Darstellung eines hydraulischen/elektrischen Schaltplanes eines Bremssystems einer mobilen Arbeitsmaschine, insbesondere eines Radladers, mit einem Drucksensor gemäß der Erfindung und
- Figur 2: eine schematische Signalfluss-Darstellung des Bremssystems der mobilen Arbeitsmaschine gemäß Figur 1.

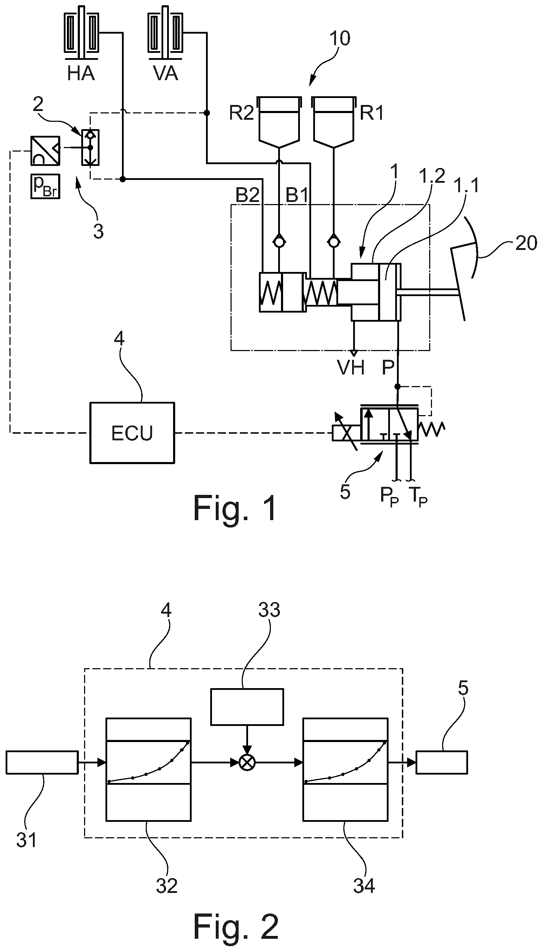

In Figur 1 ist ein Ausführungsbeispiel eines Bremssystems 10 einer mobilen Arbeitsmaschine bzw. eines Radladers schematisch dargestellt. Dieses Bremssystem 10 basiert im Wesentlichen auf einem Bremszylinder 1. Dieser Bremszylinder 1 beinhaltet jedoch keine durch einen Pedalhub betätigten Ventile wie dies derzeit beim Stand der Technik bei sog. Servosystemen der Fall ist, sondern "nur" einen Versorgungsanschluss P, über den die unterstützende Wirkfläche durch einen extern generierten Servodruck beaufschlagt werden kann. Hierfür ist z.B. am Anschluss Pp eine Druckbeaufschlagung mittels einer nicht näher dargestellten Hydraulikpumpe vorzusehen.

Darüber hinaus kann in vorteilhafter Weise ein Bremspedal 20 bzw. eine Pedalmechanik bereits von Beginn des Pedalhubes an in Kontakt mit einem Bremskolben 1.1. Ein Bremszylinder 1.2 wird in vorteilhafter Weise möglichst so dimensioniert, dass über die sog. "nicht-unterstützte" Pedal-Kraftwirkung durch die Pedalbetätigung des Bedieners, die gesetzlich geforderte Bremswirkung, u.a. für den Fall eines Ausfalls der hydraulischen Energieversorgung, gegeben ist.

Bei dem dargestellten Ausführungsbeispiel des Bremssystems 10 wird z.B. über ein Wechselventil 2 und/oder einen Druckmessgeber 3 bzw. Bremssensor 3 in vorteilhafter Weise der (höchste resultierende) Bremsdruck im Bremssystem 10 bzw. in den vorhandenen bzw. abgebildeten zwei Bremskreisen gemessen, d.h. in vorteilhafter Weise der tatsächlich wirksame Bremsdruck des Bremssystems 10 bzw. eines vorderen Bremskreises VA und/oder eines hinteren Bremskreises HA generiert einen Signalwert bzw. Bremsparameter. Anhand einer z.B. frei parametrierbaren Kennlinie (vgl. u.a. Figur 2) kann diesem Mess-/Signalwert über eine Kontrolleinheit 4 bzw. sog. ECU 4 ein korrespondierender Servodruck zugeordnet werden und dementsprechend ein Stellglied 5 bzw. proportionales Druckminderventil 5 bestromt bzw. kontrolliert/gesteuert werden.

Als Resultat ergibt sich in vorteilhafter Weise ein wirksamer Bremsdruck pBr,ges., der sich vorteilhafterweise als Summe der Teildrücke pHBZ, d.h. aus der mechanischen Betätigung des Bremspedals, und pServo, d.h. aus der extern generierten Druckbeaufschlagung der o.g. Hydraulikpumpe, ergibt. Dabei wirkt pServo übersetzt durch das Verhältnis der Wirkflächen AServo, die durch den Druck pServo beaufschlagt wird, und AKolben mit welcher die Bremskolben die Bremsflüssigkeit verdrängen. Damit gilt: pBr,ges. - pHBZ + pServo * AServo/ AKolben.

Anstelle des Wechselventils 2 können die Wirkdrücke in den jeweiligen Bremskreisen VA und/oder HA z.B. auch über separate Druckmessgeber 3 oder gemeinsam insb. bei einem Einkreissystem erfasst und z.B. über die ECU 4 verglichen werden. Dargestellt ist beispielhaft ein zweikreisiges Bremssystem 10, wobei nach dem selben Prinzip jedoch auch Bremssysteme 10 mit nur einem Kreis oder auch mehr als zwei Kreisen umsetzbar sind.

Das vorliegend als separates Bauteil dargestellte Druckminderventil 5, ebenso, wie das Wechselventil 2 und der/die Druckaufnehmer bzw. Bremssensor 3 können in ein Gehäuse des Bremszylinders 1.2 integriert werden. Hierdurch ergeben sich Vorteile in punkto Bauraum und/oder Handling.

Das dargestellte Bremssystem 10 sieht z.B. in vorteilhafter Weise vor, möglichst den Servodruck abhängig vom resultierenden Bremsdruck zu steuern. Mittels eines weiteren Bremssensors 3 bzw. Druckmessgebers 3 zwischen Druckminderventil 5 und Bremszylinder 1.2 kann in vorteilhafter Weise ein geschlossener Regelkreis für den Servodruck umgesetzt werden.

Anstelle des resultierenden Bremsdrucks kann u.a. auch der Hub bzw. Pedalweg des Bremspedals 20 oder des Kolbens 1.1 des Bremszylinders 1.2, d.h. sog. "Inch-Signal", möglichst als Bremsparameter bzw. als sog. Führungsgröße für den Servodruck genutzt werden.

Der unterstützende Servodruck vom Anschluss Pp kann anstelle des Proportionalventils 5 auch z.B. über ein gepulst angesteuertes Schaltventil (nicht dargestellt) aus einem sog. Konstantdruckkreis generiert werden.

Anstelle einer Kennlinie (vgl. Figur 2) kann der Zusammenhang zwischen dem Servodruck und der Führungsgröße auch über Formeln beschrieben werden. Die Kennlinien bzw. Formeln können sich statt auf den zu generierenden Servodruck direkt auf den Stromwert beziehen, mit dem das Proportionalventil zu versorgen ist.

So wird in vorteilhafter Weise der unterstützende Servodruck des Bremssystems in vorteilhafter Weise über die ECU 4 gesteuert bzw. geregelt.

In Figur 2 ist ein Signalfluss des vorliegenden, beispielhaften druckgeführten Bremssystems 10 dargestellt. Am Anfang des Signalflusses ist ein gemessener Bremsparameter 31 bzw. gemäß dem in Figur 1 beispielhaft verwendeten Drecksensors 3 ein gemessener/erfasster Bremsdruck 31 in bar dargestellt. Mit einer Charakteristik der Servounterstützung 32, wobei z.B. ein Ausgang mittels einer schematisch dargestellten Kennlinie den Druckanteil der Servounterstützung am resultierenden Bremsdruck in bar ist und mit einem Parameter 33 der Flächenübersetzung zwischen den Wirkflächen von Servo- und Bremsdruck miteinander einer Ventilcharakteristik 34 des Druckminderventiles 5 zugeführt werden. Letztere generiert als deren Ausgang einen Steuerstrom des Ventiles in mA.

Das in Figur 1 dargestellte Bremssystem 10 lässt sich äußerst flexibel abstimmen. Es bietet die Möglichkeit, das Maß der Servounterstützung über den gesamten Bereich der Bremswirkung frei zu bestimmen. Damit lassen sich Bremssysteme 10 sehr komfortabel mit geringem Aufwand an Betätigungskraft abstimmen, ohne dabei Einbußen in Sachen Feinfühligkeit und Dosierbarkeit hinnehmen zu müssen, wie dies bislang bei Stufenkolben und meist auch klassischen servounterstützten Bremssystemen der Fall ist.

Das dargestellte System weist einen deutlich geringeren Komponentenaufwand auf, als es z.B. Fremdkraftbremssysteme gemäß dem Stand der Technik tun. Der Bremszylinder 1.2 baut kompakter, als der Zylinder klassischer Servobremsen und nur wenig größer, als nicht unterstützte Bremszylinder. Daher ist das System, bezogen auf die gebotene Funktionalität, sehr kosteneffizient.

Die kombinierte Auswertung des resultierenden Bremsdrucks mit dem Hub/Weg des Bremspedals, z.B. über das sog. Inch-Signal ermöglicht in vorteilhafter Weise auch ein sog. "Condition Monitoring", um z.B. Verschleißprozesse oder sich ankündigende Betriebsstörungen des Bremssystems 10 vorherzusagen und den Bediener rechtzeitig davor zu warnen.

Gerade die direkte mechanische Kopplung zwischen servounterstützbarem Bremskolben 1.1 mit dem Betätigungsstößel und damit der Pedalbetätigung ermöglicht einige Vorteile und besondere Wirkungen des Systems. Ebenso wie die proportionale, elektronisch steuer- bzw. regelbare Beeinflussung des unterstützenden Servodrucks.

## Patentansprüche

1. Mobile Arbeitsmaschine, insbesondere Radlader, mit einem Fahrzeugrahmen und mit einer Antriebseinheit zum Antreiben wenigstens eines um eine Antriebsachse drehbaren Antriebslaufrades, wobei wenigstens ein Arbeitswerkzeug und/oder eine Werkzeughaltevorrichtung zum Halten des Arbeitswerkzeugs vorgesehen ist, wobei wenigstens eine zumindest ein Bremselement (HA, VA) aufweisende Bremseinheit (10) zum Bremsen des wenigstens einen Antriebslaufrades vorgesehen ist, wobei die Bremseinheit (10) als wenigstens eine Bremsflüssigkeit umfassende Hydraulik-Bremseinheit (10) ausgebildet ist, wobei wenigstens ein Bremspedal (20) zum manuellen Betätigen von einer Bedienperson und zum Druckbeaufschlagen der Bremsflüssigkeit vorgesehen ist, wobei die Hydraulik-Bremseinheit (10) wenigstens eine Zylinder-Kolben-Einheit (1) mit wenigstens einer zwischen einem Bremszylindergehäuse (1.2) und einem Bremskolben (1.1) angeordneten Kolbenkammer umfasst, **dadurch gekennzeichnet, dass** wenigstens ein Bremssensor (3) zum Erfassen eines Bremsparameters vorgesehen ist und dass der Bremssensor (3) und/oder Bremsparameter zum Kontrollieren/Steuern/Regeln der Hydraulik-Bremseinheit (10) und/oder der Zylinder-Kolben-Einheit (1) und/oder des Hydraulikdruckes der Kolbenkammer ausgebildet ist.

2. Arbeitsmaschine nach Anspruch 1, **dadurch gekennzeichnet, dass** der Bremssensor (3) zum Kontrollieren/Steuern/Regeln eines Sensor-Stellgliedes (5), insbesondere eines Bremsdruckventils (5), ausgebildet ist.

3. Arbeitsmaschine nach einem der vorgenannten Ansprüche, **dadurch gekennzeichnet, dass** wenigstens eine elektrische und/oder elektronische Kontrolleinheit (4) zum elektrischen und/oder elektronischen Kontrollieren/Steuern/Regeln des Sensor-Stellgliedes (5) und/oder der Hydraulik-Bremseinheit (10) und/oder der Zylinder-Kolben-Einheit (1) und/oder des Hydraulikdruckes der Kolbenkammer vorgesehen ist.

4. Arbeitsmaschine nach einem der vorgenannten Ansprüche, **dadurch gekennzeichnet, dass** der Bremssensor (3) als Drucksensor (3) zum Erfassen eines Hydraulikdruckes der Bremsflüssigkeit ausgebildet ist.

5. Arbeitsmaschine nach einem der vorgenannten Ansprüche, **dadurch gekennzeichnet, dass** der Bremssensor (3) und/oder Drucksensor zwischen dem Bremselement (HA, VA) des Antriebslaufrades und der Hydraulik-Bremseinheit (10) und/oder Zylinder-Kolben-Einheit (1) und/oder dem Bremszylindergehäuse (1.2) angeordnet ist.

6. Arbeitsmaschine nach einem der vorgenannten Ansprüche, **dadurch gekennzeichnet, dass** der Bremssensor (3) als Bremswegsensor zum Erfassen eines Bremsweges des Bremspedals (20) und/oder des Bremskolbens (1.1) ausgebildet ist.

7. Arbeitsmaschine nach einem der vorgenannten Ansprüche, **dadurch gekennzeichnet, dass** der Bremssensor (3) als Beschleunigungssensor zum Erfassen einer Bremsbeschleunigung der Arbeitsmaschine ausgebildet ist.

8. Arbeitsmaschine nach einem der vorgenannten Ansprüche, **dadurch gekennzeichnet, dass** der Bremssensor (3) als elektrischer und/oder elektronischer Bremssensor (3) zum elektrischen/elektronischen Erfassen des Bremsparameters und/oder elektrischen/elektronischen Kontrollieren/Steuern/Regeln des Sensor-Stellgliedes (5) ausgebildet ist.

9. Arbeitsmaschine nach einem der vorgenannten Ansprüche, **dadurch gekennzeichnet, dass** das Sensor-Stellglied (5) zum Druckbeaufschlagen des Kolbenraumes und/oder der Hydraulik-Bremseinheit (10) und/oder der Zylinder-Kolben-Einheit (1) ausgebildet ist, wobei insbesondere eine Pedalkraft des Bremspedals (20) und/oder eine hydraulische Druckkraft der Druckbeaufschlagung des Sensor-Stellgliedes (5) eine Bremskraft und/oder einen Bremsdruck der Bremseinheit (10) und/oder des Bremselementes (HA, VA) ausbilden/erzeugen.

10. Arbeitsmaschine nach einem der vorgenannten Ansprüche, **dadurch gekennzeichnet, dass** das Sensor-Stellglied (5) zwischen einer Druckerzeugungseinheit (Pp) zum Druckbeaufschlagen der Bremsflüssigkeit und dem Kolbenraum und/oder der Hydraulik-Bremseinheit (10) und/oder der Zylinder-Kolben-Einheit (1) angeordnet ist.

11. Arbeitsmaschine nach einem der vorgenannten Ansprüche, **dadurch gekennzeichnet, dass** die Kontrolleinheit (4) zum Anpassen/Ändern der hydraulischen Druckkraft der Druckbeaufschlagung des Sensor-Stellgliedes (5) in Abhängigkeit des Bremsparameters des Bremssensors (3) und/oder eines Betriebsparameters der Arbeitsmaschine ausgebildet ist, so dass insbesondere eine anpassbare/veränderbare Bremscharakteristik realisierbar ist.

12. Arbeitsmaschine nach einem der vorgenannten Ansprüche, **dadurch gekennzeichnet, dass** die Zylinder-Kolben-Einheit (1) und/oder der Bremskolben (1.1) wenigstens einen ersten Kolben der Kolbenkammer mit einer ersten Kolbenfläche und einen zweiten Kolben mit einer zweiten Kolbenfläche aufweist, wobei die erste Kolbenfläche der Kolbenkammer größer als die zweite Kolbenfläche ist.
